# EUROPÄISCHE PATENTANMELDUNG

(11) **EP 1 467 111 A2**
(43) Veröffentlichungstag der Anmeldung: **13.10.2004**
(21) Anmeldenummer: 04007204.3
(22) Anmeldetag: 25.03.2004
(51) Int. Cl.: F16C 17/10, F16C 17/26, F03D 7/02, F03D 11/00

(54) **Verfahren zur Einstellung des Spiels oder der Vorspannung eines Lagers**

(30) Priorität: 07.04.2003 DE 10316005
(71) Anmelder: AB SKF, S-415 50 Göteborg (SE)
(72) Erfinder: Kottwitz, Bernd, 66346 Püttlingen (DE); Löser, Norbert, 66346 Püttlingen (DE); Liesegang, Hans-Jürgen, 26419 Schortens (DE)
(74) Vertreter: Kohl, Thomas

(57) **Zusammenfassung**

Die Erfindung betrifft ein Verfahren zur Einstellung des Spiels oder der Vorspannung eines Lagers (1), das einen ersten Lagerring (2) und einen zweiten Lagerring (3) aufweist. Am ersten Lagerring (2) sind mehrere Triebstockelemente (9) befestigt. Das erfindungsgemäße Verfahren zeichnet sich dadurch aus, dass die Einstellung des Spiels oder der Vorspannung mit Hilfe der Triebstockelemente (9) vorgenommen wird.

## Beschreibung

Die Erfindung betrifft ein Verfahren zur Einstellung des Spiels oder der Vorspannung eines Lagers. Weiterhin betrifft die Erfindung ein Lager, bei dem eine Einstellung des Spiels oder der Vorspannung nach dem erfindungsgemäßen Verfahren möglich ist.

Aus der DE 100 12 773 A1 ist es bereits bekannt, bei einer Drehverbindung insbesondere für die Maschinenhauslagerung einer Windenergieanlage mittels einer Bremseinrichtung den Anlagedruck der Gleitflächen des Lagers zu verändern und dadurch das Spiel oder die Vorspannung zu variieren. Dabei werden axial wirkende Gleitflächen mittels hydraulischer Kolben mehr oder weniger stark gegen ihre Gegenflächen gepresst. Insbesondere bedingt durch die hydraulische Verstellung der Gleitflächen ist die bekannte Lageranordnung relativ aufwendig aufgebaut und weist eine Vielzahl von Komponenten auf, die regelmäßig gewartet werden müssen.

Der Erfindung liegt die Aufgabe zu Grunde, die Einstellung des Spiels oder der Vorspannung eines Lagers mit einem möglichst geringen Aufwand zu ermöglichen.

Diese Aufgabe wird durch ein Verfahren mit der Merkmalskombination des Anspruchs 1 gelöst.

Das erfindungsgemäße Verfahren bezieht sich auf die Einstellung des Spiels oder der Vorspannung eines Lagers, das einen ersten und einen zweiten Lagerring aufweist. Am ersten Lagerring sind mehrere Triebstockelemente befestigt. Das erfindungsgemäße Verfahren zeichnet sich dadurch aus, dass die Einstellung des Spiels oder der Vorspannung mit Hilfe der Triebstockelemente vorgenommen wird.

Die Erfindung hat den Vorteil, dass für die Einstellung des Spiels oder der Vorspannung des Lagers ohnehin vorhandene Komponenten verwendet werden und somit für die Einstellung kaum ein zusätzlicher Aufwand erforderlich ist. Zudem lässt sich die Einstellung auch im eingebauten Zustand des Lagers schnell und präzise durchführen, falls die Triebstockelemente im eingebauten Zustand zugänglich sind.

Mit den Triebstockelementen kann die Position eines ersten Ringteils und eines zweiten Ringsteils, die zusammen den ersten Lagerring ausbilden, relativ zueinander variiert werden. Insbesondere können das erste Ringteil und das zweite Ringteil mit Hilfe der Triebstockelemente einander angenähert werden, bis das gewünschte Spiel oder die gewünschte Vorspannung erreicht ist. Bei einem Ausführungsbeispiel für das erfindungsgemäße Verfahren werden die Triebstockelemente hierzu jeweils fest mit dem ersten Ringteil verbunden. Für das zweite Ringteil können die Triebstockelemente einen direkt oder indirekt wirkenden einen Anschlag aufweisen, durch den der Abstand zwischen dem ersten Ringteil und dem zweiten Ringteil auf einen Maximalwert begrenzt wird. Der Maximalwert, der letztendlich das Spiel oder die Vorspannung definiert, kann auf unterschiedliche Art und Weise vorgegeben werden, so dass das erfindungsgemäße Verfahren auf unterschiedliche Weise umgesetzt werden kann.

Beispielsweise kann der Maximalwert durch die Abmessungen der Triebstockelemente vorgegeben werden. Um ein gewünschtes Spiel oder eine gewünschte Vorspannung zu erzielen, werden bei dieser Vorgehensweise die Triebstockelemente entsprechend nachgearbeitet. Falls eine Bearbeitung der Triebstockelemente nicht gewünscht wird, ist es beispielsweise auch möglich, den Maximalwert durch Distanzstücke vorzugegeben, die zwischen den Anschlag und das zweite Ringteil oder zwischen das erste Ringteil und das zweite Ringteil eingefügt werden. Auf diese Weise lässt sich sehr einfach durch unterschiedlich dimensionierte Distanzstücke ein gewünschtes Spiel oder eine gewünschte Vorspannung einstellen. Insbesondere ist es auch möglich, dass sich die Distanzstücke auf den Anschlag abstützen und federnd am zweiten Ringteil anliegen. Dadurch kann im Lager ein Anpressdruck erzeugt werden, der auch bei verschleißbedingten Dimensionsänderungen der Lagerkomponenten annähernd gleich bleibt, so dass sich das Lager sebsttätig nachstellt.

Bei einem bevorzugten Ausführungsbeispiel werden die Triebstockelemente zusätzlich zur Befestigung am ersten Lagerring an einem Maschinenelement befestigt. Dies hat den Vorteil, dass keine Befestigungsschrauben zur Fixierung des ersten Lagerrings an dem Maschinenelement benötigt werden.

Das erfindungsgemäßen Lager weist einen ersten Lagerring und einen zweiten Lagerring auf, wobei am ersten Lagerring mehrere Triebstockelemente befestigt sind. Die Besonderheit des erfindungsgemäßen Lagers besteht darin, dass der erste Lagerring ein erstes Ringteil und ein zweites Ringteil aufweist, die axial nebeneinander angeordnet sind. In einem bevorzugten Ausführungsbeispiel sind das erste Ringteil und das zweite Ringteil durch die Triebstockelemente miteinander verbunden, vorzugsweise miteinander verschraubt.

Die Erfindung wird im folgenden anhand der in der Zeichnung dargestellten Ausführungsbeispiele beschrieben, die sich jeweils auf eine Turmlagerung einer Windenergieanlage beziehen. Mit der Turmlagerung wird das Maschinenhaus der Windenergieanlage relativ zum Turm drehbar gelagert, damit der Rotor jeweils entsprechend in den Wind gedreht werden kann. Das erfindungsgemäße Verfahren und das erfindungsgemäße Lager sind jedoch auch bei anderen Anwendungen einsetzbar wie beispielsweise bei Krananlagen, Baggern usw.

Es zeigen:
- Figur 1: ein erstes Ausführungsbeispiel für das erfindungsgemäße Lager, bei dem die Einstellung des Spiels oder der Vorspannung mittels auf Maß gearbeiteter Triebstockbolzen erfolgt, inklusive eines Ausschnitts der Einbauumgebung in Schnittdarstellung,
- Figur 2: ein zweites Ausführungsbeispiel, bei dem das für die Einstellung des Spiels oder der Vorspannung benötigte Maß mittels Passscheiben eingestellt wird, in einer Figur 1 entsprechenden Darstellung,
- Figur 3: ein drittes Ausführungsbeispiel, bei dem das Spiel oder die Vorspannung selbsttätig mittels Tellerfedern nachgestellt wird in einer Figur 1 entsprechenden Darstellung und
- Figur 4: ein viertes Ausführungsbeispiel, bei dem die Einstellung des Spiels oder der Vorspannung mittels Unterlegblechen durchgeführt wird in einer Figur 1 entsprechenden Darstellung.

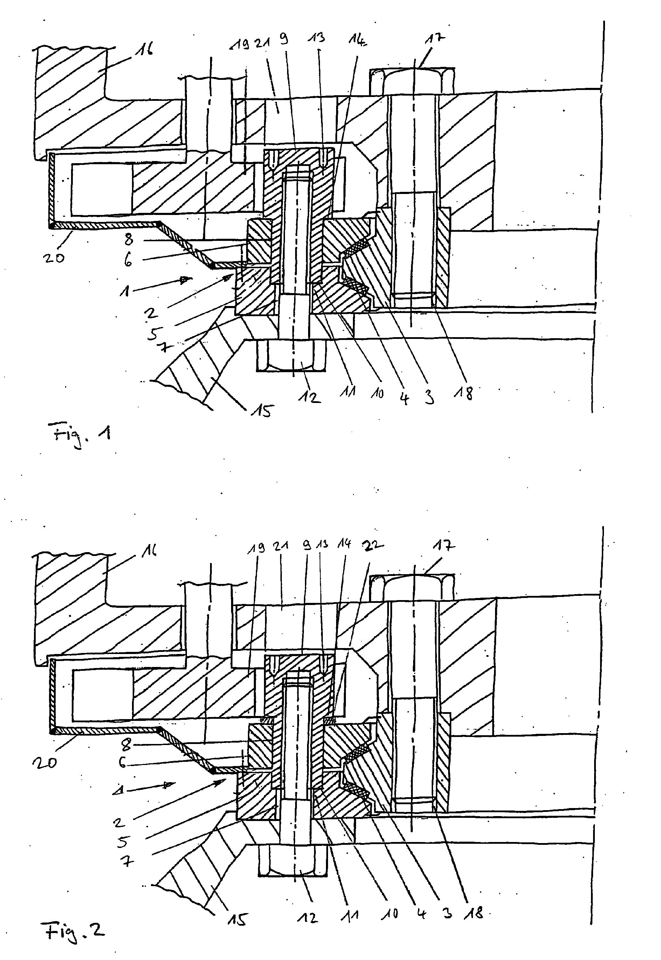

Figur 1 zeigt ein erstes Ausführungsbeispiel des erfindungsgemäßen Lagers 1 und einen Ausschnitt der Einbauumgebung in Schnittdarstellung. Das Lager 1 weist einen Außenring 2 und einen Innenring 3 auf, die sich über zwei Sätze von Gleitbelägen 4 aufeinander abstützen. Die Gleitbeläge 4 schließen einen Winkel mit der Axialrichtung des Lagers 1 ein, so dass das Lager 1 sowohl Axialkräfte als auch Radialkräfte aufnehmen kann. Der Außenring 2 besteht aus einem ersten Ringteil 5 und einem zweiten Ringteil 6, die in Axialrichtung nebeneinander angeordnet sind. Das erste Ringteil 5 weist einen Satz von ersten Axialbohrungen 7 auf, die gleichmäßig über den Umfang verteilt sind und bezüglich des Bohrungsdurchmessers jeweils gestuft ausgebildet sind. Das zweite Ringteil 6 weist einen Satz von zweiten Axialbohrungen 8 auf, die fluchtend zu den ersten Axialbohrungen 7 angeordnet sind und deren Bohrungsdurchmesser dem größeren Bohrungsdurchmesser der ersten Axialbohrungen 7 entspricht. In jedes Paar von Axialbohrungen 7 und 8 ist eine Triebstockhülse 9 von der Seite der zweiten Axialbohrung 8 her soweit eingeführt, dass eine Stirnseite 10 der Triebstockhülse 9 axial an einer Schulter 11 der ersten Bohrung 7 anliegt. In jede Triebstockhülse 9 ist eine Schraube 12 von der Seite der ersten Axialbohrung 7 her eingeschraubt, mit der die Triebstockhülse 9 am ersten Ringteil 5 fixiert ist. Um das Einschrauben zu erleichtern weisen die Triebstockhülsen 9 an ihren freien Enden Vertiefungen 13 für den Eingriff eines Werkzeugs auf. Die Triebstockhülsen 9 sind bezüglich ihres Außendurchmessers gestuft ausgebildet, so dass sie Anschlagflächen 14 aufweisen, an die das zweite Ringteil 6 des Außenrings 2 anschlägt.

Die Schrauben 12 dient nicht nur der Fixierung der Triebstockhülsen 9 am ersten Ringteil 5, sondern auch der Fixierung des Außenrings 2 an einem Turm 15 der Windenergieanlage. Auf dem Turm 15 wird mit Hilfe des Lagers 1 ein Maschinenhaus 16 drehbar gelagert, dass zu diesem Zweck über Befestigungsschrauben 17, mit dem Außenring 3 verschraubt ist. Hierzu weist der Außenring 3 über seinen Umfang verteilt angeordnete axiale Gewindebohrungen 18 auf, in die die Befestigungsschrauben 17 eingeschraubt sind. Über ein Ritzel 19, das formschlüssig in die Triebstockhülsen 9 eingreift, kann das Maschinenhaus 16 relativ zum Turm 15 verdreht werden. Weiterhin ist in dem in Figur 1 abgebildeten Ausschnitt der Windenergieanlage noch eine Abdeckung 20 dargestellt, die das Ritzel 19 vor Verunreinigungen und Korrosionseinflüssen schützt und einen Austritt des im Bereich des Ritzels 19 vorgehaltenen Schmierstoffs verhindert.

Die Einstellung des Spiels oder der Vorspannung des Lagers 1 wird mit Hilfe der Triebstockhülsen 9 vorgenommen. Hierzu und zum Auswechseln der Triebstockhülsen 9 sind diese über eine Bohrung 21 des Maschinenhauses 16 zugänglich. Das Spiel bzw. die Vorspannung des Lagers 1 hängt vom axialen Abstand der beiden Ringteile 5 und 6 des Außenrings 2 ab. Durch diesen Abstand wird vorgegeben, wie viel Luft zwischen den Ringteilen 5 und 6 einerseits und den Gleitbelägen 4 andererseits vorhanden ist. Die Gleitbeläge 4 sind am Innenring 3 befestigt, der zwischen das erste Ringteil 5 und das zweite Ringteil 6 eintaucht. Je näher die beiden Ringteile 5 und 6 einander angenähert werden, desto geringer ist die Luft bzw. desto höher ist die Vorspannung des Lagers 1.

Die Annäherung der beiden Ringteile 5 und 6 aneinander erfolgt mittels der Triebstockhülsen 9, die mit ihren Anschlagflächen 14 den Abstand zwischen dem ersten Ringteil 5 und dem zweiten Ringteil 6 auf einen Maximalwert begrenzen. Da die Triebstockhülsen 9 durch die Schrauben 12 mit ihren Stirnseiten 10 fest gegen die Schultern 11 des ersten Ringteils 5 gepresst werden, wird ein Maximalwert für den Abstand zwischen den beiden Ringteilen 5 und 6 durch den axialen Abstand zwischen den Stirnseiten 10 und den Anschlagflächen 14 der Triebstockhülsen 9 vorgegeben. Zur Einstellung eines gewünschten Spiels bzw. einer gewünschten Vorspannung wird somit der axiale Abstand zwischen den Stirnseiten 10 und den Anschlagflächen 14 der Triebstockhülsen 9 auf ein dafür erforderliches Maß gebracht. Zur Verringerung dieses Abstands können die Triebstockhülsen 9 im Bereich ihrer Stirnseiten 10 jeweils entsprechend gekürzt werden. Zur Vergrößerung dieses Abstands kann von den Triebstockhülsen 9 im Bereich der Anschlagsflächen 14 Material abgenommen werden. Falls eine Bearbeitung der Triebstockhülsen 9 nicht gewünscht wird, kann die Einstellung des Spiels bzw. der Vorspannung im Rahmen der Erfindung gemäß den im folgenden beschriebenen Ausführungsbeispielen erfolgen.

Figur 2 zeigt ein zweites Ausführungsbeispiel des Lagers 1 in einer Figur 1 entsprechenden Darstellung. Dieses Ausführungsbeispiel unterscheidet sich vom ersten Ausführungsbeispiel darin, dass axial zwischen den Anschlagflächen 14 der Triebstockhülsen 9 und dem zweiten Ringteil 6 des Außenrings 2 jeweils Passscheiben 22 angeordnet sind. Dieses Passscheiben 22 werden für die Einstellung des Spiels bzw. der Vorspannung des Lagers 1 herangezogen. Hierzu werden die Triebstockhülsen 9 wiederum mittels der Schrauben 12 fest gegen das erste Ringteil 5 des Außenrings 2 gepresst. Der Maximalwert für den axialen Abstand zwischen den beiden Ringteilen 5 und 6 hängt dann von den axialen Abmessungen der Passscheiben 22 ab. Verfügen die Passscheiben 22 über große axiale Abmessungen, so verbleibt ein vergleichsweise geringer axialer Abstand zwischen den beiden Ringteilen 5 und 6. Werden dagegen Passscheiben 22 mit kleinen axialen Abmessungen verwendet, so fällt dieser Abstand entsprechend größer aus. Der Zusammenhang zwischen dem axialen Abstand der beiden Ringteile 5 und 6 und dem Spiel bzw. der Vorspannung des Lagers 1 ist dabei der gleiche, wie bereits bei Figur 1 beschrieben. Somit kann über das Axialmaß der Passscheiben 22 das Spiel bzw. die Vorspannung des Lagers 1 eingestellt werden. Die Passscheiben 22 können hierzu bereits entsprechend vorgefertigt sein und/oder auf das gewünschte Maß nachgearbeitet werden. Eine Bearbeitung der Triebstockhülsen 9 ist dabei nicht erforderlich.

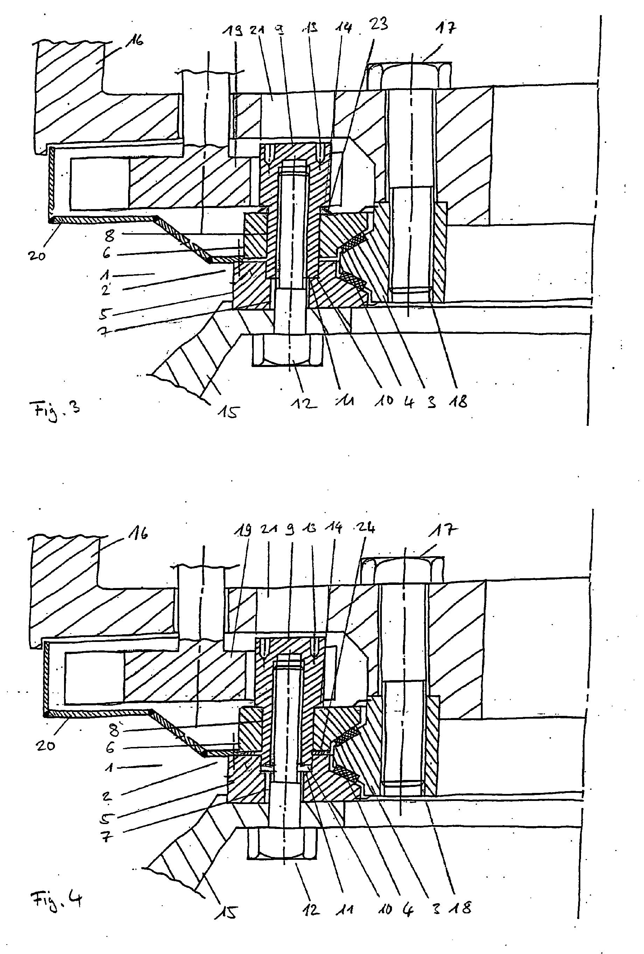

Figur 3 zeigt ein drittes Ausführungsbeispiel des Lagers 1 in einer Figur 1 entsprechenden Darstellung. Das dritte Ausführungsbeispiel unterscheidet sich vom zweiten Ausführungsbeispiel dadurch, dass statt der Passscheiben 22 Tellerfedern 23 verwendet werden. Die Tellerfedern 23 stützen sich auf die Anschlagflächen 14 der Triebstockhülsen 9 ab und üben eine Axialkraft auf das zweite Ringteil 6 des Außenrings 2 aus. Durch diese Axialkraft wird das zweite Ringteil 6 so verschoben, dass sich der Abstand zum ersten Ringteil 5 verringert. Die Verschiebung ist aber nur soweit möglich, bis die beiden Ringteile 5 und 6 fest an den Gleitbelägen 4 anliegen. Insgesamt wird somit durch die Tellerfedern 23 eine Vorspannung des Lagers 1 hergestellt, die auch bei einem Verschleiß der Gleitbeläge 4 annähernd erhalten bleibt, d. h. das Lager 1 stellt sich durch die Tellerfedern 23 selbsttätig nach. Allerdings ist das Lager 1 in Axialrichtung nicht völlig starr ausgebildet sondern besitzt durch die Tellerfedern 23 eine gewisse Nachgiebigkeit, solange die Tellerfedern 23 nicht völlig zusammengedrückt sind.

Figur 4 zeigt ein viertes Ausführungsbeispiel des Lagers 1 in einer Figur 1 entsprechenden Darstellung. Beim vierten Ausführungsbeispiel liegen die Stirnseiten 10 der Triebstockhülsen 9 nicht an den Schultern 11 des ersten Ringteils 5 des Außenrings 2 an. Die Fixierung des Außenrings 2 am Turm 15 erfolgt beim vierten Ausführungsbeispiel dadurch, dass die Triebstockhülsen 9 durch die Schrauben 12 im Bereich der Anschlagflächen 14 gegen das zweite Ringteil 6 des Außenrings 2 gepresst werden. Um dennoch eine Einstellung des Spiels bzw. der Vorspannung des Lagers 1 zu ermöglichen, wird der axiale Abstand der beiden Ringteile 5 und 6 durch dazwischen gelegte Unterlegbleche 24 vorgegeben, die durch das Einschrauben der Schrauben 12 in die Triebstockhülsen 9 fest eingeklemmt werden. Je dicker die Unterlegbleche 24 sind, desto größer ist der axiale Abstand der beiden Ringteile 5 und 6 und desto größer ist folglich das Spiel bzw. desto kleiner die Vorspannung, d. h. die Einstellung des Spiels bzw. der Vorspannung erfolgt durch Einlegen von Unterlegblechen entsprechender Dicke. Im Unterschied zu den ersten beiden Ausführungsbeispielen wird durch die Unterlegbleche 24 nicht nur der Maximalwert für den axialen Abstand der beiden Ringteile 5 und 6 vorgegeben, sondern der tatsächliche Abstand eingestellt. Ein Unterschied zu den ersten drei Ausführungsbeispielen besteht zudem darin, dass nicht nur das erste Ringteil 5 des Außenrings 2 durch die Triebstockhülsen 9 gegen den Turm 15 gepresst wird, sondern der gesamte Außenring 2. Dies bedeutet, dass das zweite Ringteil 6 des Außenrings 2 nach Festziehen der Schrauben 12 über keinerlei axiale Bewegungsmöglichkeiten mehr verfügt, sondern völlig starr fixiert ist.

Bei den vorstehend beschriebenen Ausführungsbeispielen ist das Lager 1 jeweils als Gleitlager ausgebildet. Im Rahmen der Erfindung ist es jedoch gleichermaßen möglich, das Lager 1 als Wälzlager auszubilden. Ebenso ist es möglich, statt der beschriebenen Triebstockhülsen 9 andersartig ausgebildete Triebstockelemente einzusetzen. Beispielsweise besteht die Möglichkeit, entsprechend den Triebstockhülsen 9 gestufte Triebstockbolzen zu verwenden, die die beiden Ringteile 5 und 6 und vollständig durchdringen und in den Turm 15 eingeschraubt sind bzw. mittels Muttern am Turm 15 fixiert sind. Bei einer weiteren Abwandlung ist nicht der Außenring 2, sondern der Innenring 3 zweiteilig ausgebildet. Dementsprechend sind bei dieser Abwandlung die Triebstockhülsen 9 am Innenring 3 angeordnet. Als Material für den Außenring 2, den Innenring 3 und die Triebstockhülsen 9 wird in der Regel jeweils Stahl verwendet. Falls dies der jeweilige Anwendungsfall zulässt, ist es prinzipiell jedoch auch möglich, andere Materialien zu verwenden.

### Bezugszeichen

- 1: Lager
- 2: Außenring
- 3: Innenring
- 4: Gleitbelag
- 5: erstes Ringteil
- 6: zweites Ringteil
- 7: erste Axialbohrung (erstes Ringteil 5)
- 8: zweite Axialbohrung (zweites Ringteil 6)
- 9: Triebstockhülse
- 10: Stirnseite (Triebstockhülse 9)
- 11: Schulter (erstes Ringteil 5)
- 12: Schraube
- 13: Vertiefung
- 14: Anschlagfläche
- 15: Turm
- 16: Maschinenhaus
- 17: Befestigungsschraube
- 18: Gewindebohrung
- 19: Ritzel
- 20: Abdeckung
- 21: Bohrung
- 22: Passscheibe
- 23: Tellerfeder
- 24: Unterlegblech

## Patentansprüche

1. Verfahren zur Einstellung des Spiels oder der Vorspannung eines Lagers (1), das einen ersten Lagerring (2) und einen zweiten Lagerring (3) aufweist, wobei am ersten Lagerring (2) mehrere Triebstockelemente (9) befestigt sind, **dadurch gekennzeichnet, dass** die Einstellung des Spiels oder der Vorspannung mit Hilfe der Triebstockelemente (9) vorgenommen wird.

2. Verfahren nach Anspruch 1, **dadurch gekennzeichnet, dass** mit den Triebstockelementen (9) die Position eines ersten Ringteils (5) und eines zweiten Ringteils (6), die zusammen den ersten Lagerring (2) ausbilden, relativ zueinander variiert wird.

3. Verfahren nach Anspruch 2, **dadurch gekennzeichnet, dass** das erste Ringteil (5) und das zweite Ringteil (6) mit Hilfe der Triebstockelemente (9) einander angenähert werden, bis das gewünschte Spiel oder die gewünschte Vorspannung erreicht ist.

4. Verfahren nach einem der Ansprüche 2 oder 3, **dadurch gekennzeichnet, dass** die Triebstockelemente (9) jeweils fest mit dem ersten Ringteil (5) verbunden werden.

5. Verfahren nach einem der Ansprüche 2 bis 4, **dadurch gekennzeichnet, dass** die Triebstockelemente (9) jeweils einen Anschlag (14) aufweisen, der direkt oder indirekt auf das zweite Ringteil (6) einwirkt und durch den der Abstand zwischen dem ersten Ringteil (5) und dem zweiten Ringteil (6) auf einen Maximalwert begrenzt wird.

6. Verfahren nach Anspruch 5, **dadurch gekennzeichnet, dass** der Maximalwert durch die Abmessungen der Triebstockelemente (9) vorgegeben wird.

7. Verfahren nach Anspruch 5, **dadurch gekennzeichnet, dass** der Maximalwert durch Distanzstücke (22, 23, 24) vorgegeben wird, die zwischen den Anschlag (14) und das zweite Ringteil (6) oder zwischen das erste Ringteil (5) und das zweite Ringteil (6) eingefugt werden.

8. Verfahren nach Anspruch 7, **dadurch gekennzeichnet, dass** die Distanzstücke (23) sich auf den Anschlag (14) abstützen und federnd am zweiten Ringteil (6) anliegen.

9. Verfahren nach einem der vorhergehenden Ansprüche, **dadurch gekennzeichnet, dass** die Triebstockelemente (9) an einem Maschinenelement (15) befestigt werden.

10. Lager mit einem ersten Lagerring (2) und einem zweiten Lagerring (3), wobei am ersten Lagerring (2) mehrere Triebstockelemente (9) befestigt sind, **dadurch gekennzeichnet, dass** der erste Lagerring (2) ein erstes Ringteil (5) und ein zweites Ringteil (6) aufweist, die axial nebeneinander angeordnet sind.

11. Lager nach Anspruch 10, **dadurch gekennzeichnet, dass** das erste Ringteil (5) und das zweite Ringteil (6) durch die Triebstockelemente (9) miteinander verbunden sind.

12. Lager nach Anspruch 10, **dadurch gekennzeichnet, dass** das erste Ringteil (5) und das zweite Ringteil (6) durch die Triebstockelemente (9) miteinander verschraubt sind.
